# FASCICULE DE BREVET EUROPEEN

(11) **EP 4 157 658 B1**
(45) Date de publication et mention de la délivrance du brevet: **29.05.2024**
(21) Numéro de dépôt: 21732379.9
(22) Date de dépôt: 25.03.2021
(51) Int. Cl.: B60H 1/00, B60H 1/14, B60H 1/02, F01P 7/14, B60K 11/02, B60K 1/00

(54) **VÉHICULE AUTOMOBILE AVEC MOTORISATION ÉLECTRIQUE ÉQUIPÉ D'UN DISTRIBUTEUR DE FLUIDE CALOPORTEUR**
KRAFTFAHRZEUG MIT EINEM ELEKTROMOTOR MIT WÄRMETRÄGERFLUIDVERTEILER
MOTOR VEHICLE HAVING AN ELECTRIC MOTOR PROVIDED WITH A HEAT TRANSFER FLUID DISTRIBUTOR

(30) Priorité: 26.05.2020 FR 2005527
(43) Date de publication de la demande: 05.04.2023
(73) Titulaire: Stellantis Auto SAS, 78300 Poissy (FR)
(72) Inventeur: SEIGNER, Maxime, 90500 BEAUCOURT (FR); RENOULT, Didier, 93220 GAGNY (FR); ORHANT, Mathieu, 70400 HERICOURT (FR)
(86) Numéro de dépôt international: PCT/FR2021/050527
(87) Numéro de publication internationale: WO 2021/240076

(56) Documents cités:
- EP-A1- 3 499 634
- EP-A1- 3 647 086
- US-A1- 2008 251 235
- US-A1- 2019 061 470
- US-A1- 2019 366 800

## Description

La présente invention revendique la priorité de la demande française N°2005527 déposée le 26.05.2020 dont le contenu (texte, dessins et revendications) est ici incorporé par référence.

La présente invention concerne un véhicule automobile avec motorisation électrique tel que connu par exemple du document de brevet US-A1-2008251235 , et équipé d'un distributeur de fluide caloporteur.

Un type de circuit de fluide caloporteur d'un véhicule automobile électrique ou hybride connu, présenté notamment par le document FR-A1-3078386, comporte une première boucle à très basse température comprenant une batterie d'alimentation d'une machine électrique de traction et un refroidisseur de climatisation du véhicule, une deuxième boucle haute température comprenant un réchauffeur électrique du fluide caloporteur et un aérotherme de chauffage de l'habitacle, et une troisième boucle basse température comprenant la machine électrique de traction, son onduleur de commande et un échangeur thermique avec l'air ambiant.

Dans une première variante présentée par ce document, le circuit de fluide comporte deux vannes à trois voies qui permettent en les pilotant des interactions entre les trois circuits. On peut réaliser en particulier suivant les conditions de roulage et la température ambiante, à partir d'un réchauffeur électrique ou des calories générées par la machine électrique et son onduleur, un réchauffage de la batterie ou un chauffage de l'habitacle du véhicule.

Une fois la batterie en température on peut utiliser les calories générées par cette batterie pour réchauffer l'habitacle. Les calories produites en surplus qui ne sont pas utilisées, sont évacuées par l'échangeur thermique avec l'air ambiant.

Toutefois ces types de circuits de fluide caloporteur doivent comporter en plus des vannes à trois voies d'autres fonctions nécessaires pour assurer son fonctionnement, formant habituellement à chaque fois un sous-ensemble disposant d'un corps comprenant des conduits pour réaliser divers composants.

On doit alors disposer dans le compartiment moteur du véhicule plusieurs sous-ensembles comportant chacun un corps, donnant un encombrement qui peut être difficile à installer dans un compartiment moteur. De plus ces sous-ensembles doivent être installés individuellement dans le véhicule avec un grand nombre de raccord occasionnant des risques de fuites, et des temps de montage entraînant des coûts.

On connait en outre du document de brevet US-A1-2008251235 un système de gestion thermique dans le domaine de l'invention.

La présente invention a notamment pour but d'éviter ces problèmes de l'art antérieur.

Elle propose à cet effet véhicule automobile équipé d'une motorisation électrique, et d'un distributeur de fluide caloporteur comportant un corps comprenant des entrées et une sortie de boucle chaude, une entrée et une sortie de boucle froide, et une vanne commandée à trois voies réalisant dans une première position un passage de l'entrée de boucle chaude vers la sortie de boucle chaude et de l'entrée de boucle froide vers la sortie de boucle froide, et dans une deuxième position un passage de l'entrée de boucle chaude vers la sortie de boucle froide, et de l'entrée de boucle froide vers la sortie de boucle chaude, ce distributeur étant remarquable en ce que le corps comporte un clapet anti-retour empêchant le passage de la sortie de boucle froide vers l'entrée de boucle froide, et comporte un passage de section calibrée de l'entrée de boucle froide vers la sortie de boucle chaude, qui possède une arrivée disposée plus bas que son départ.

Un avantage de ce véhicule automobile et qu'en regroupant dans un même corps du distributeur de fluide la vanne trois voies, le clapet anti-retour et le passage avec section calibrée présentant une différence de hauteur à ses extrémités dans sa position de montage, on réalise de manière compacte et économique un ensemble facilement et rapidement installé dans le véhicule, qui donne à la fois la première et la deuxième position de passage.

Dans la première position grâce à la différence de hauteur des extrémités du passage calibré, on obtient une forte limitation de l'échange thermique par thermosiphon entre la sortie de boucle chaude et l'entrée de boucle froide, qui dirige le fluide chaud vers cette sortie. Dans la deuxième position de passage grâce au clapet anti-retour on obtient un blocage de la circulation de l'entrée de la boucle chaude vers l'entrée de la boucle froide, pour diriger ce fluide chaud vers la sortie de boucle froide.

Le véhicule automobile selon l'invention peut comporter de plus une ou plusieurs des caractéristiques suivantes, qui peuvent être combinées entre elles.

Avantageusement, le passage de section calibrée relie une première chambre haute comprenant l'entrée de boucle froide, à une chambre basse comportant la sortie de boucle chaude.

Dans ce cas, avantageusement les centres de la première chambre haute et de la chambre basse présentent dans la position de fonctionnement du distributeur une différence de hauteur supérieure à 100mm. Avantageusement, la vanne trois voies est une vanne proportionnelle. Avantageusement, le clapet anti-retour comporte un passage de fuite calibré permettant un débit annexe ne dépassant pas un litre par minute lors d'une mise en charge du circuit.

Avantageusement le clapet anti-retour sépare une première chambre haute d'une deuxième chambre haute, ces deux chambres hautes étant disposées à la même hauteur dans le prolongement l'une de l'autre.

En particulier, la boucle froide peut comporter deux entrées dans une première chambre haute.

Avantageusement, le corps est réalisé par un moulage d'une matière plastique.

En particulier, le distributeur de fluide peut être disposé sur un circuit de fluide caloporteur de régulation de température d'une machine électrique de traction de la motorisation électrique, et d'une batterie d'alimentation de cette machine.

Dans ce cas, en particulier, la boucle chaude peut passer par la machine électrique de traction et la boucle froide par un échangeur thermique avec l'air ambiant.

L'invention sera mieux comprise et d'autres caractéristiques et avantages apparaîtront plus clairement à la lecture de la description ci-après donnée à titre d'exemple, en référence aux dessins annexés dans lesquels :
[Fig. 1] est un schéma d'un distributeur de fluide caloporteur de véhicule automobile selon l'invention, avec la vanne commandée dans sa première position ; et
[Fig. 2] est un schéma de ce distributeur avec la vanne commandée dans sa deuxième position.

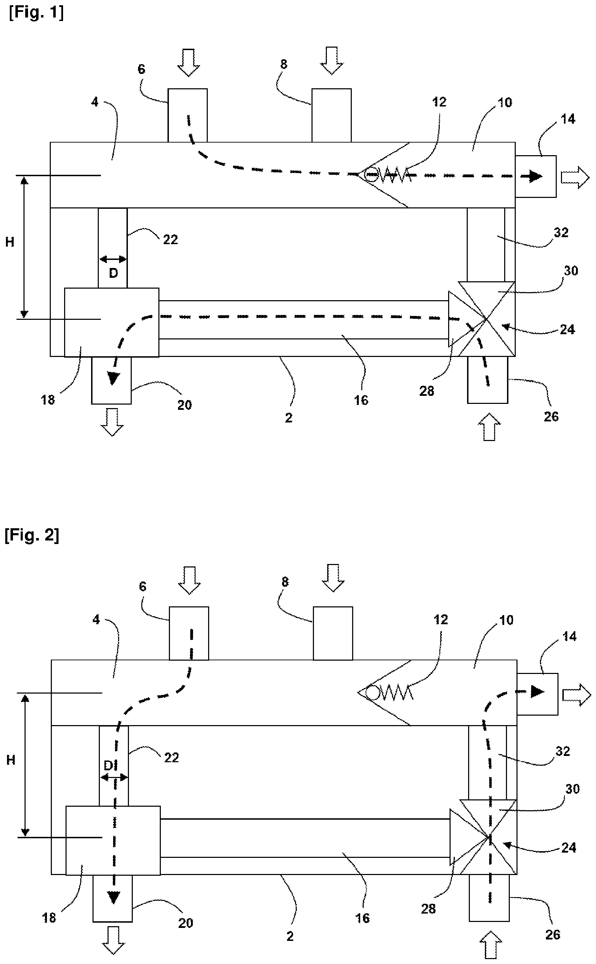

La figure 1 présente un distributeur comportant un corps 2 de forme sensiblement parallélépipédique allongé horizontalement dans sa position de montage et de fonctionnement, comprenant dans la longueur de la partie supérieure une première chambre haute 4 recevant au-dessus une première entrée 6 et une deuxième entrée de boucle froide 8, qui est alignée avec une deuxième chambre haute 10 recevant à son extrémité une sortie de boucle froide 14. En variante non représentée, cette chambre haute ne reçoit qu'une unique entrée 6 de boucle froide.

Un clapet anti-retour 12 comprenant un ressort de tarage s'ouvre en comprimant son ressort quand la pression dans la première chambre haute 4 est supérieure à celle de la deuxième chambre haute 10 avec un écart suffisant, et se ferme en dessous de cet écart.

On obtient quand la pression d'entrée de la boucle froide est suffisamment supérieure à la pression de sortie de cette boucle froide pour comprimer le ressort du clapet anti-retour 12, un débit principal de cette boucle qui va de la première entrée 6 et de la deuxième entrée de boucle froide 8, vers la sortie de boucle froide 14.

Le clapet anti-retour 12 comporte un passage de fuite calibré permettant un petit débit annexe ne dépassant pas un litre par minute, afin de permettre dans tous les cas de fonctionnement une mise en charge de pompes électriques extérieures au distributeur pour éviter de les bloquer.

Le corps du distributeur 2 comporte dans la longueur de sa partie inférieure une chambre basse 16 comprenant à son extrémité disposée sous la deuxième chambre haute 10 une vanne trois voies 24, et à l'autre extrémité sous la première chambre haute 4 une cavité de raccordement 18 recevant en dessous une sortie de boucle chaude 20.

La vanne trois voies 24 est une électrovanne proportionnelle, qui suivant son réglage répartit dans une proportion variable le fluide caloporteur venant d'une première voie formée par une entrée de boucle chaude 26 disposée en dessous, vers une deuxième voie 28 reliée à la chambre basse 16 pour conduire vers la sortie de boucle chaude 20, et vers une troisième voie 30 reliée par un canal intermédiaire montant 32 à la deuxième chambre haute 10 pour conduire vers la sortie de boucle froide 14.

Pour un distributeur de fluide disposé dans sa position d'utilisation, un passage de section calibrée 22 présentant un diamètre défini D, comporte une extrémité supérieure de départ débouchant sous la première chambre haute 4 et une extrémité inférieure d'arrivée débouchant au-dessus de la cavité de raccordement 18, avec une arrivée plus basse que le départ.

On obtient avec la vanne trois voies 24 fermée vers la troisième voie 30 et ouverte entièrement vers la deuxième voie 28, une boucle de fluide chaud permettant un débit principal qui va de l'entrée de boucle chaude 26 vers la sortie de boucle chaude 20.

En particulier la différence de hauteur H entre les centres de la première chambre haute 4 et de la chambre basse 16 supérieure à 100mm, donne aux extrémités du passage de section calibrée 22 un différentiel de hauteur qui s'ajoute à la réduction de sa section de passage, pour éviter ou limiter un effet thermosiphon qui donnerait une montée automatique du fluide chaud de la boucle chaude présent dans la chambre basse, vers le fluide froid de la boucle froide présent dans la première chambre haute.

On peut en particulier dans cette configuration utiliser la boucle chaude pour conduire le fluide chaud vers un échangeur thermique dissipant les calories générées par la machine électrique de traction, puis utiliser la boucle froide pour récupérer le fluide froid en sortie de cet échangeur, et le diriger vers cette machine électrique.

Avantageusement le corps 2 est réalisé par un moulage d'une matière plastique, permettant de former en une opération d'injection de cette matière des formes complexes comprenant les chambres 4, 10, 16 et les différents passages entre elles.

La figure 2 présente la vanne trois voies 24 fermée vers la deuxième voie 28 et ouverte entièrement vers la troisième voie 30, donnant une circulation directe qui va de l'entrée de boucle chaude 26 vers la sortie de boucle froide 14.

Le fluide chaud sortant par cette sortie de boucle froide 14 passe ensuite dans différents composants pour les réchauffer, en particulier dans la batterie d'alimentation de la machine de traction pour la mettre en température, puis arrive ensuite dans la boucle froide comprenant la première entrée 6 et la deuxième entrée de boucle froide 8 pour entrer dans la première chambre haute 4.

Le fluide froid passe ensuite de la première chambre haute 4 à la sortie de boucle chaude 20 en passant par le passage de section calibrée 22, pour retourner à la machine électrique de traction qui le réchauffe.

La section du passage 22 est ajustée pour trouver le meilleur compromis entre la limitation de l'échange thermique par thermosiphon entre la chambre basse 16 et la première chambre haute 4, et une faible perte de charge lors du passage du fluide de cette première chambre haute vers la chambre basse.

## Revendications

1. Véhicule automobile équipé d'une motorisation électrique, et d'un distributeur de fluide caloporteur comportant un corps (2) comprenant une entrée (6, 8) et une sortie de boucle froide (14), une entrée (26) et une sortie de boucle chaude (20), et une vanne commandée à trois voies (24) réalisant dans une première position un passage de l'entrée de boucle chaude (26) vers la sortie de boucle chaude (20) et de l'entrée de boucle froide (6, 8) vers la sortie de boucle froide (14), et dans une deuxième position un passage de l'entrée de boucle chaude (26) vers la sortie de boucle froide (14), et de l'entrée de boucle froide (6, 8) vers la sortie de boucle chaude (20), **caractérisé en ce que** le corps (2) comporte un clapet anti-retour (12) empêchant le passage de la sortie de boucle froide (14) vers l'entrée de boucle froide (6, 8), et comporte un passage de section calibrée (22) de l'entrée de boucle froide (6, 8) vers la sortie de boucle chaude (20), qui possède une arrivée disposée plus bas que son départ.

2. Véhicule automobile selon la revendication 1, **caractérisé en ce que** le passage de section calibrée (22) relie une première chambre haute (4) comprenant l'entrée de boucle froide (6, 8), à une chambre basse (16) comportant la sortie de boucle chaude (20).

3. Véhicule automobile selon la revendication 2, **caractérisé en ce que** les centres de la première chambre haute (4) et de la chambre basse (16) présentent dans la position de fonctionnement du distributeur une différence de hauteur (H) supérieure à 100mm.

4. Véhicule automobile selon l'une quelconque des revendications précédentes, **caractérisé en ce que** la vanne trois voies (24) est une vanne proportionnelle.

5. Véhicule automobile selon l'une quelconque des revendications précédentes, **caractérisé en ce que** le clapet anti-retour (12) comporte un passage de fuite calibré permettant un débit annexe ne dépassant pas un litre par minute lors d'une mise en charge du circuit.

6. Véhicule automobile selon l'une quelconque des revendications précédentes, **caractérisé en ce que** le clapet anti-retour (12) sépare une première chambre haute (4) d'une deuxième chambre haute (10), ces deux chambres hautes (4, 10) étant disposées à la même hauteur dans le prolongement l'une de l'autre.

7. Véhicule automobile selon l'une quelconque des revendications précédentes, **caractérisé en ce que** la boucle froide comporte deux entrées (6, 8) dans une première chambre haute (4).

8. Véhicule automobile selon l'une quelconque des revendications précédentes, **caractérisé en ce que** le corps (2) est réalisé par un moulage d'une matière plastique.

9. Véhicule automobile selon l'une quelconque des revendications précédentes, **caractérisé en ce que** le distributeur de fluide est disposé sur un circuit de fluide caloporteur de régulation de température d'une machine électrique de traction de la motorisation électrique, et d'une batterie d'alimentation de cette machine.

10. Véhicule automobile selon la revendication 9, **caractérisé en ce que** la boucle chaude passe par la machine électrique de traction, et la boucle froide par un échangeur thermique avec l'air ambiant.

## Patentansprüche

1. Kraftfahrzeug, das mit einem Elektromotor und einem Wärmeübertragungsflüssigkeitsverteiler ausgestattet ist, der einen Körper (2) mit einem Einlass (6, 8) und einem Auslass der Kaltschleife (14), einem Einlass (26) und einem Auslass der Kaltschleife und einer Heißschleife umfasst ( 20) und ein gesteuertes Dreiwegeventil (24), das in einer ersten Position einen Durchgang vom Heißkreislaufeinlass (26) zum Heißkreislaufauslass (20) und vom Kaltkreislaufeinlass (6, 8) zum Kaltkreislauf bereitstellt Auslass (14) und in einer zweiten Position einen Durchgang vom Heißschleifen-Einlass (26) zum Kaltschleifen-Auslass (14) und vom Kaltschleifen-Einlass (6, 8) zum Heißschleifen-Auslass (20), **dadurch gekennzeichnet, dass** der Körper (2) ein Rückschlagventil (12) aufweist, das den Durchgang des Kältekreislaufauslasses (14) zum Eingang des Kältekreislaufs (6, 8) verhindert, und einen kalibrierten Abschnittsdurchgang (22) von diesem umfasst Kaltschleifeneinlass (6, 8) zum Heißschleifenauslass (20), dessen Einlass tiefer als sein Auslass angeordnet ist.

2. Kraftfahrzeug nach Anspruch 1, **dadurch gekennzeichnet, dass** der kalibrierte Abschnittsdurchgang (22) eine erste obere Kammer (4), die den Kaltkreislaufeinlass (6, 8) umfasst, mit einer unteren Kammer (16) verbindet, die den Auslass-Warmkreislauf (20) umfasst ).

3. Kraftfahrzeug nach Anspruch 2, **dadurch gekennzeichnet, dass** die Mittelpunkte der ersten oberen Kammer (4) und der unteren Kammer (16) in der Betriebsstellung des Verteilers einen Höhenunterschied (H) von mehr als 100 mm aufweisen .

4. Kraftfahrzeug nach einem der vorhergehenden Ansprüche, **dadurch gekennzeichnet, dass** das Dreiwegeventil (24) ein Proportionalventil ist.

5. Kraftfahrzeug nach einem der vorhergehenden Ansprüche, **dadurch gekennzeichnet, dass** das Rückschlagventil (12) einen kalibrierten Leckagekanal umfasst, der bei belastetem Kreislauf einen zusätzlichen Durchfluss von höchstens einem Liter pro Minute ermöglicht.

6. Kraftfahrzeug nach einem der vorhergehenden Ansprüche, **dadurch gekennzeichnet, dass** das Rückschlagventil (12) eine erste obere Kammer (4) von einer zweiten oberen Kammer (10) trennt, wobei diese beiden oberen Kammern (4, 10) angeordnet sind auf gleicher Höhe als Verlängerung zueinander.

7. Kraftfahrzeug nach einem der vorhergehenden Ansprüche, **dadurch gekennzeichnet, dass** der Kältekreislauf zwei Einlässe (6, 8) in einer ersten oberen Kammer (4) aufweist.

8. Kraftfahrzeug nach einem der vorhergehenden Ansprüche, **dadurch gekennzeichnet, dass** die Karosserie (2) durch Formen eines Kunststoffmaterials hergestellt ist.

9. Kraftfahrzeug nach einem der vorhergehenden Ansprüche, **dadurch gekennzeichnet, dass** der Flüssigkeitsverteiler in einem Wärmeübertragungsflüssigkeitskreislauf zur Temperaturregelung einer elektrischen Traktionsmaschine des Elektromotors und einer Batterie zur Stromversorgung dieser Maschine angeordnet ist.

10. Kraftfahrzeug nach Anspruch 9, **dadurch gekennzeichnet, dass** der Warmkreislauf durch die elektrische Traktionsmaschine und der Kaltkreislauf durch einen Wärmetauscher mit Umgebungsluft verläuft.

## Claims

1. Motor vehicle equipped with an electric motor, and a heat transfer fluid distributor comprising a body (2) comprising an inlet (6, 8) and a cold loop outlet (14), an inlet (26) and a cold loop outlet hot loop (20), and a three-way controlled valve (24) providing in a first position a passage from the hot loop inlet (26) to the hot loop outlet (20) and the cold loop inlet (6, 8) towards the cold loop outlet (14), and in a second position a passage from the hot loop inlet (26) to the cold loop outlet (14), and from the cold loop inlet (6, 8) towards the hot loop outlet (20), **characterized in that** the body (2) comprises a non-return valve (12) preventing the passage of the cold loop outlet (14) towards the inlet of cold loop (6, 8), and comprises a calibrated section passage (22) from the cold loop inlet (6, 8) to the hot loop outlet (20), which has an inlet arranged lower than its outlet.

2. Motor vehicle according to claim 1, **characterized in that** the calibrated section passage (22) connects a first upper chamber (4) comprising the cold loop inlet (6, 8), to a lower chamber (16) comprising the outlet hot loop (20).

3. Motor vehicle according to claim 2, **characterized in that** the centers of the first upper chamber (4) and of the lower chamber (16) present in the operating position of the distributor a difference in height (H) greater than 100 mm.

4. Motor vehicle according to any one of the preceding claims, **characterized in that** the three-way valve (24) is a proportional valve.

5. Motor vehicle according to any one of the preceding claims, **characterized in that** the non-return valve (12) comprises a calibrated leakage passage allowing an additional flow rate not exceeding one liter per minute when the circuit is loaded.

6. Motor vehicle according to any one of the preceding claims, **characterized in that** the non-return valve (12) separates a first upper chamber (4) from a second upper chamber (10), these two upper chambers (4, 10) being arranged at the same height as an extension of one another.

7. Motor vehicle according to any one of the preceding claims, **characterized in that** the cold loop has two inlets (6, 8) in a first upper chamber (4).

8. Motor vehicle according to any one of the preceding claims, **characterized in that** the body (2) is made by molding a plastic material.

9. Motor vehicle according to any one of the preceding claims, **characterized in that** the fluid distributor is arranged on a heat transfer fluid circuit for temperature regulation of an electric traction machine of the electric motor, and of a battery of power supply to this machine.

10. Motor vehicle according to claim 9, **characterized in that** the hot loop passes through the electric traction machine, and the cold loop through a heat exchanger with ambient air.
